(19) Europäisches Patentamt
European Patent Office
Office européen des brevets

(11) **EP 3 330 774 B1**

(12) # EUROPEAN PATENT SPECIFICATION

(45) Date of publication and mention of the grant of the patent:
**18.03.2020 Bulletin 2020/12**

(21) Application number: **16726473.8**

(22) Date of filing: **07.01.2016**

(51) Int Cl.:
*G02B 27/22* (2018.01)   *H04N 13/373* (2018.01)
*H04N 13/371* (2018.01)

(86) International application number:
**PCT/CN2016/070354**

(87) International publication number:
**WO 2017/016195 (02.02.2017 Gazette 2017/05)**

(54) **DISPLAY DEVICE AND FUNCTIONING METHOD THEREOF**

ANZEIGEVORRICHTUNG UND FUNKTIONSVERFAHREN DAFÜR

DISPOSITIF D'AFFICHAGE ET SON PROCÉDÉ DE FONCTIONNEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.07.2015 CN 201510451026**

(43) Date of publication of application:
**06.06.2018 Bulletin 2018/23**

(73) Proprietor: **BOE Technology Group Co., Ltd.**
**Beijing 100015 (CN)**

(72) Inventors:
• **SONG, Song**
  **Beijing 100176 (CN)**

• **NAGAYAMA, Kazuyoshi**
  **Beijing 100176 (CN)**

(74) Representative: **Cohausz & Florack**
**Patent- & Rechtsanwälte**
**Partnerschaftsgesellschaft mbB**
**Bleichstraße 14**
**40211 Düsseldorf (DE)**

(56) References cited:
| | |
|---|---|
| WO-A1-95/05052 | CN-A- 1 798 351 |
| CN-A- 101 900 884 | CN-A- 104 297 968 |
| CN-A- 104 991 349 | CN-U- 202 472 131 |
| US-A1- 2009 207 124 | US-A1- 2013 053 100 |
| US-B1- 6 195 205 | |

## Description

FIELD OF THE INVENTION

The present invention relates to the field of display technology, and particularly to a display device and an operating method thereof.

BACKGROUND OF THE INVENTION

Main principle of 3D display technology is that a left eye and a right eye of a viewer receive different images respectively, and the viewer can perceive the levels of the images by analyzing and overlapping the image for left eye and the image for right eye in the viewer's brain so as to produce a stereoscopic sense.

At present, the 3D display devices are mainly classified into two types, one type of the 3D display devices is one required to be viewed by wearing 3D glasses, and the other type of the 3D display devices is autostereoscopic 3D display. Parallax barrier technology is a kind of autostereoscopic 3D technology, which, by means of a parallax barrier member, enables the image for left eye to be seen only by the left eye and cannot be seen by the right eye, at the same time, the image for right eye to be seen only by the right eye and cannot be seen by the left eye, so that a picture for left eye and a picture for right eye are formed respectively, and a 3D picture is formed finally. Therefore, it is required to add an extra parallax barrier member for an existing 3D display to realize 3D display. However, there is limitation to the existing display device realizing 3D display by means of the parallax barrier member, for example, since the parallax barrier member is fixed on the display panel, the display device can only display 3D image, and since sizes and positions of the light-shielding regions of the parallax barrier member are fixed, it is impossible for the parallax barrier member to be adapted to distances between two eyes of various viewers and to self-adaptively adjusts distance from a viewer to the display to obtain optimum 3D display effect.

US 2013/053100 A1 discloses a mobile terminal including a display unit to display a left-eye image and a right-eye image, a barrier panel to generate a parallax barrier region, and a barrier controller to adjust the parallax barrier region. Furthermore, a method for controlling a barrier pattern is disclosed which includes calculating a relative position of a barrier panel with respect to a display unit, adjusting a barrier region generated in the barrier panel according to the calculated relative position, and displaying a left-eye image and a right-eye image via the display unit.

US 2009/207124 A1 discloses a display device including a driver, a main display panel that receives an image signal from the driver to display an image and that is substantially fixed to the driver, a backlight assembly that is disposed between the main display panel and the driver to radiate light to a rear surface of the main display panel, and a sub-display panel that receives a image signal from the driver to display an image and that can be moved. The display device includes a first mode, in which the sub-display panel is disposed to be opposite to a rear surface of the main display panel, and a second mode, in which the sub-display panel is disposed to be opposite to a front surface of the main display panel.

SUMMARY OF THE INVENTION

In view of the above problem, the present invention provides a display device and an operating method thereof, which can solve the limitation to the 3D display and defect in which the 3D display cannot be effectively adjusted.

The present invention provides a display device according to claim 1.

Preferably, the first display panel and the second display panel are also capable of being arranged side by side, so that the first display panel transmits light of the backlight, and the second display panel transmits ambient light from a light-incoming surface side of the second display panel.

Preferably, light-exiting surface of the first display panel and the first surface of the second display panel are provided with a flexible transparent flat film, which is configured to form contact surfaces between the first display panel and the second display panel when the second display panel is folded to the first display panel along the first direction, so that light emitted from the first display panel radiates on the second display panel uniformly.

Preferably, the display device further comprises a sensor and a processor, the sensor and the processor are provided in a peripheral region of the second display panel, wherein

the sensor is configured to measure a distance between the left eye and the right eye of the viewer, and

the processor is configured to adjust widths of the light-shielding regions based on the distance between the eyes and a preset width of a sub-pixel of the first pixel unit.

Preferably, the processor is configured to adjust the widths of the light-shielding regions according to the following light-shielding region adjusting formula:

$$c = \frac{4pl}{p+l}$$

where c is the width of the light-shielding region, p is the width of the sub-pixel of the first pixel unit, and l is the distance between eyes of the viewer.

Preferably, the sensor comprises a camera, when the light-exiting surface of the first display panel is provided to be closely adjacent to and face the first surface of the second display panel, the camera is rotated to be at the second surface,

when the light-incoming surface of the first display panel is provided to be closely adjacent to and face the second surface of the second display panel, the camera is rotated to be at the first surface.

The present invention further provides an operating method of a display device according to claim 7.

Preferably, the display device further comprises a sensor and a processor, the sensor and the processor are provided in a peripheral region of the second display panel, wherein the operating method further comprises:

measuring, by the sensor, a distance between the left eye and the right eye of the viewer; and adjusting, by the processor, widths of the light-shielding regions based on the distance between the eyes and a preset width of a sub-pixel of the first pixel unit.

Preferably, the step of adjusting, by the processor, widths of the light-shielding regions based on the distance between the eyes and a preset width of a sub-pixel of the first pixel unit comprises a step of:

adjusting, by the processor, the widths of the light-shielding regions according to the following light-shielding region adjusting formula:

$$c = \frac{4\,pl}{p+l}$$

where c is the width of the light-shielding region, p is the width of the sub-pixel of the first pixel unit, and l is the distance between the eyes of the viewer.

Preferably, the sensor comprises a camera, and the operating method further comprises:

when the light-exiting surface of the first display panel is provided to be closely adjacent to and face the first surface of the second display panel, the camera is rotated to be at the second surface, and when the light-incoming surface of the first display panel is provided to be closely adjacent to and face the second surface of the second display panel, the camera is rotated to be at the first surface.

The present invention has the following advantages:

In the display device and the operating method thereof, the display device comprises a first display panel, a second display panel and a backlight, the first display panel is flexibly connected with the second display panel, the first display panel is provided at a light-exiting surface side of the backlight; the second display panel is capable of being folded to the first display panel along a first direction, so that the light-exiting surface of the first display panel is closely adjacent to and faces the first surface of the second display panel, and the second pixel array forms light-shielding regions and light-transmitting regions; and first pixel array forms a left image for a left eye of a viewer and a right image for a right eye of the viewer, so that the viewer can only see the left image by his left eye and only see the right image by his right eye through the light-shielding regions and a light-transmitting regions. The display device in the present invention overcomes the limitation of the 3D display device in the prior art, so that the display device can perform not only 3D display and 2D display, but also double-sided display. In addition, it is possible to adaptively adjust widths of the light-shielding regions to realize optimum 3D display effect according to distances between two eyes of various viewers and distance from a viewer to the display.

## BRIEF DESCRIPTION OF THE DRAWINGS

Fig.1 is a front view of a display device provided in a first embodiment of the present invention;

Fig.2 is a rear view of the display device of Fig.1;

Fig.3 is a structural diagram of a first pixel array and a second pixel array in the first embodiment;

Fig.4 is a front view of the display device shown in Fig.1 which is folded along a first direction;

Fig.5 is a rear view of the display device shown in Fig.1 which is folded along the first direction;

Fig.6 is a top view of the display device shown in Fig. 4 which is folded along the first direction;

Fig.7 is a structural diagram of light-shielding regions and light-transmitting regions formed in the display device shown in Fig.6;

Fig.8 is a diagram illustrating the principle of 3D display preformed by the display device shown in Fig.7;

Fig. 9 is a top view of another display device provided in the first embodiment of the present invention;

Fig. 10 is a front view of the display device shown in Fig. 1 which is folded along a second direction;

Fig. 11 is a rear view of the display device shown in Fig. 1 which is folded along the second direction;

Fig. 12 is a top view of the display device shown in Fig. 10 which is folded along the second direction; and

Fig. 13 is a light path diagram of the display device shown in Fig. 12 which is in a double-sided display state.

DETAILED DESCRIPTION OF THE EMBODIMENTS

In order to make persons skilled in the art better understand the solutions of the present invention, the display device and the operating method thereof will be described below in detail in conjunction with the accompanying drawings.

First Embodiment

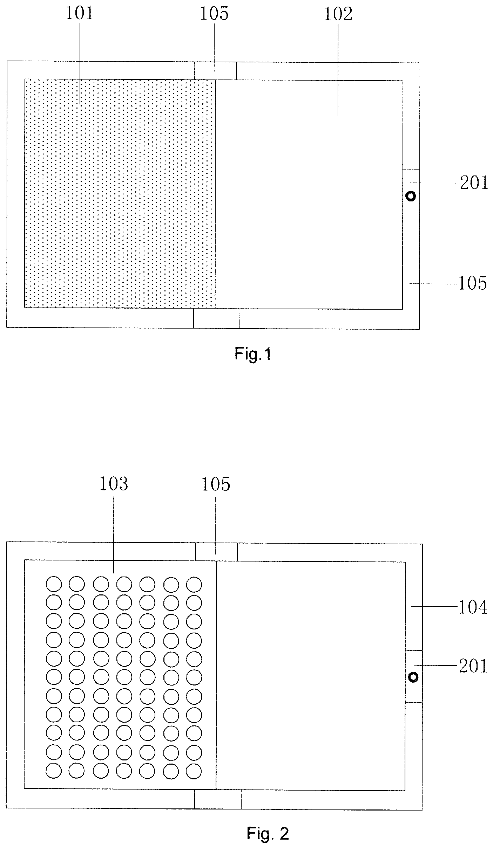

Fig.1 is a front view of a display device provided in a first embodiment of the present invention, and Fig.2 is a rear view of the display device of Fig.1. As shown in Fig. 1 and Fig. 2, the display device comprises a first display panel 101, a second display panel 102 and a backlight 103, the first display panel 101 is flexibly connected with the second display panel 102, the first display panel 101 is provided at a light-exiting surface side of the backlight 103, the second display panel 102 comprises a first surface and a second surface which are provided opposite to each other, the second display panel 102 is a transparent display panel. As shown in Fig. 1, the first surface of the second display panel 102 is located at the front side of the display device, and the second surface of the second display panel 102 is located at the rear side of the display device.

With reference to Fig.1 and Fig.2, the first display panel 101 and the second display panel 102 are arranged side by side, the first display panel 101 may transmit light of the backlight, and the second display panel 102 may transmit ambient light from a light-incoming surface side of the second display panel. Specifically, the second display panel 102 transmits ambient light from the rear side thereof, so that a viewer in front of the second display panel 102 can see the background behind the second display panel 102, and thus a transparent display function is realized.

Optionally, a flexible circuit board is provided at a boundary region of the second display panel 102. Sides of the first display panel 101 and the second display panel 102 are provided with rigid frames 104, sides of a connecting portion between the first display panel 101 and the second display panel 102 are provided with flexible frames 105. Optionally, the backlight 103 includes a plurality of uniformly distributed light-emitting diodes. Preferably, the light-emitting diodes are white light-emitting diodes, brightness of which are adjustable.

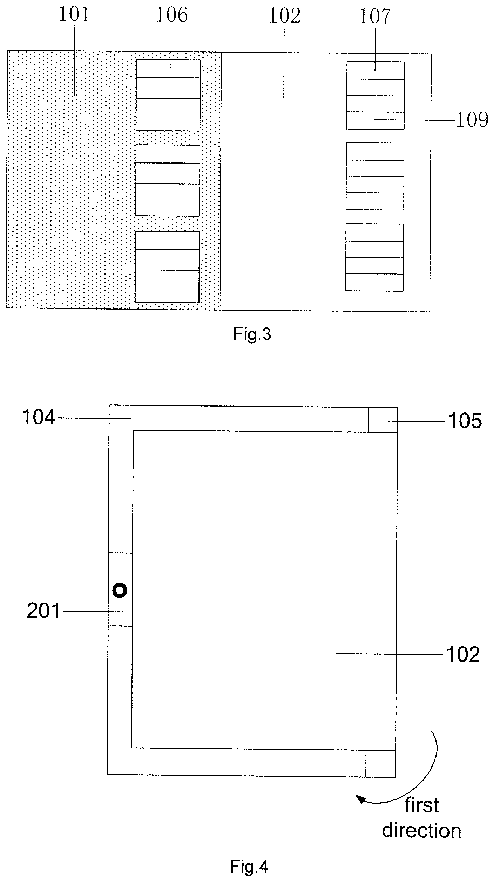

Fig.3 is a structural diagram of a first pixel array and a second pixel array in the first display panel and the display panel shown in Fig. 1. As shown in Fig.3, the first display panel 101 comprises a first pixel array 106, the second display panel 102 comprises a second pixel array 107, the first pixel array comprises a plurality of first pixel units arranged regularly, the first pixel unit comprises a plurality of sub-pixels, the second pixel array comprises a plurality of second pixel units arranged regularly, the second pixel unit comprises a plurality of sub-pixels.

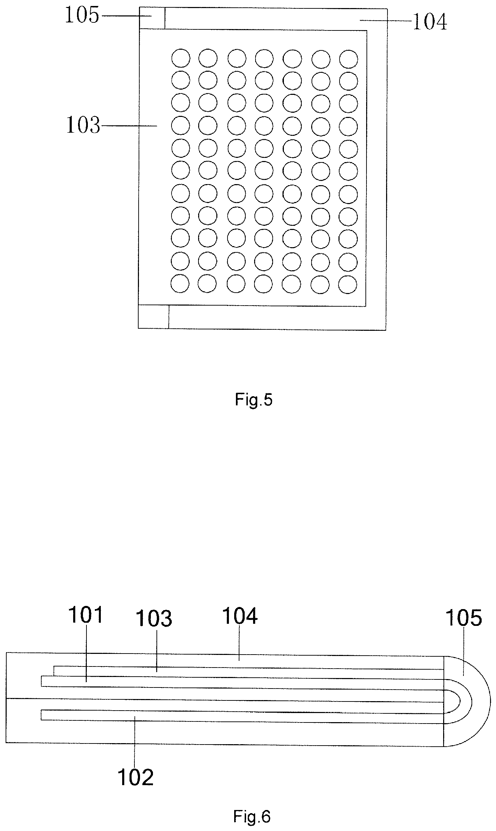

Fig.4 is a front view of the display device shown in Fig.1 which is folded along a first direction, Fig.5 is a rear view of the display device shown in Fig.1 which is folded along the first direction, and Fig.6 is a top view of the display device shown in Fig.1 which is folded along the first direction. The first direction is a direction in which the second display panel 102 is rotated clockwise to overlap with the first display panel 101 with a boundary between the first display panel 101 and the second display panel 102 as an axis. As shown in Fig.4 to Fig.6, when the first display panel 101 and the second display panel 102 are folded along the first direction, a light-exiting surface of the first display panel 101 is closely adjacent to and faces the first surface of the second display panel 102.

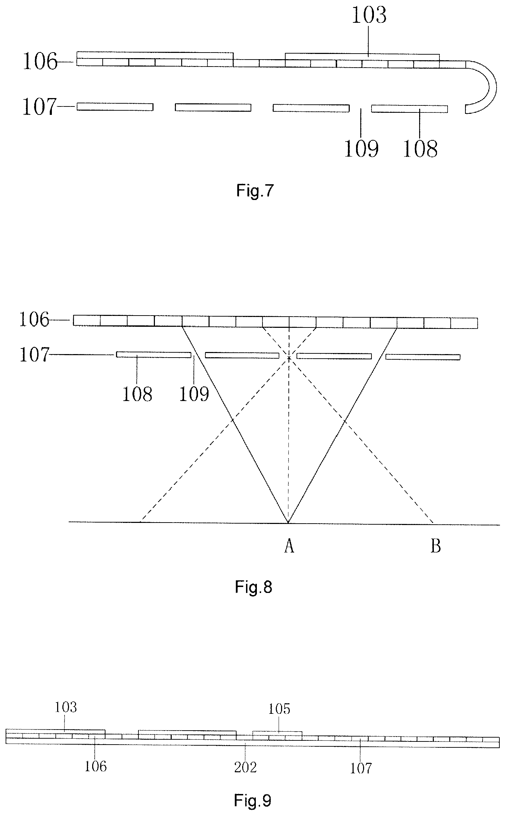

Fig.7 is a structural diagram of light-shielding regions and light-transmitting regions formed in the display device shown in Fig.6, and Fig.8 is a diagram illustrating the principle of 3D display preformed by the display device shown in Fig.7. As shown in Fig.7 and Fig. 8, gray values of part of sub-pixels of the second pixel array 107 are set to zero, the part of sub-pixels display black to form light-shielding regions 108, at the same time, gray values of the other part of the sub-pixels of the second pixel array 107 are set to a maximum value so as to form light-transmitting regions 109. The formed light-shielding regions 108 and the light-transmitting regions 109 are shown in Fig. 7 and Fig.8. By the light-shielding regions 108 and the light-transmitting regions 109, the left eye of the viewer can only see a left image for left eye formed on the first pixel array 106, and the right eye of the viewer can only see a right image for right eye formed on the first pixel array 106, thus autostereoscopic 3D display is realized.

In the present embodiment, the display device further comprises a sensor and a processor (not shown in figures), the sensor and the processor are provided in a peripheral region of the second display panel. The sensor measures a distance between the left eye and the right eye of the viewer, and the processor adjusts widths of the light-shielding regions, that is, the number of sub-pixels displaying black, based on the distance between eyes and a preset width of a sub-pixel of the first pixel unit. Preferably, the processor adjusts the widths of the light-shielding regions according to the following light-shielding region adjusting formula:

$$c = \frac{4\,pl}{p+l}$$

where c is the width of the light-shielding region 108, p is the width of the sub-pixel of the first pixel unit in the first pixel array 106, and l is the distance between eyes of the viewer.

With reference to Fig.8, point A is a position of the left eye, and point B is a position of the right eye, according to the similar triangle theorem, the following equations can be obtained:

$$\frac{h}{s} = \frac{p}{l} \quad (1)$$

$$\frac{c}{4p} = \frac{s}{s+h} \quad (2)$$

where h is a distance between the first pixel array 106 and the second pixel array 107, s is a distance between the eyes and the second pixel array 107, p is a width of the sub-pixel in the first pixel array 106, l is the distance between the eyes, and c is a width of the light-shielding region 108. The light-shielding region adjusting formula may be obtained based on the equation (1) and the equation (2). The widths of the light-shielding regions may be adjusted by the above light-shielding region adjusting formula, so that 3D display performance of the display device can be improved. In addition, to facilitate the implementation, sub-pixels of the first pixel array 106 and sub-pixels of the second pixel array 107 in the present embodiment are the same in size.

Fig. 9 is a top view of another display device provided the first embodiment of the present invention. As shown in Fig.9, light-exiting surface of the first display panel and the first surface of the second display panel are provided with a flexible transparent flat film 202, which is configured to form contact surfaces between the first display panel and the second display panel when the second display panel is folded to the first display panel as shown in Fig.6, so that light emitted from the first display panel radiates on the second display panel uniformly, thus the quality of the displayed picture of the display device is improved.

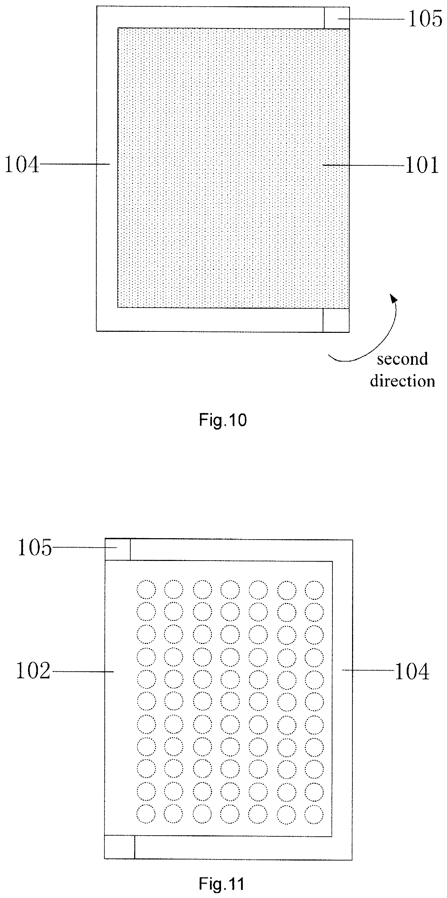

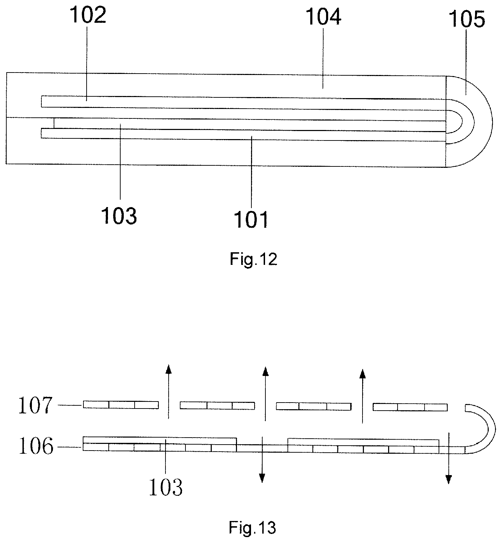

Fig. 10 is a front view of the display device shown in Fig. 1 which is folded along a second direction, Fig. 11 is a rear view of the display device shown in Fig. 1 which is folded along the second direction, and Fig. 12 is a top view of the display device shown in Fig. 10 which is folded along the second direction. As shown in Fig.10 to Fig.12, when the first display panel 101 and the second display panel 102 are folded in the second direction, light-incoming surface of the first display panel 101 faces the second surface of the second display panel 102. The first display panel 101 is configured to form a first display picture, the second display panel 102 is configured to form a second display picture, the first direction is contrary to the second direction, that is, the second direction is a direction in which the second display panel 102 is rotated anticlockwise to overlap with the first display panel 101 with a boundary between the first display panel 101 and the second display panel 102 as an axis.

Fig. 13 is a light path diagram of the display device shown in Fig. 12 which is in a double-sided display state. As shown in Fig.13, the backlight 103 is a double-sided illumination backlight and is used to supply light to the first display panel 101 and the second display panel 102 after the first display panel 101 and the second display panel 102 are folded. Specifically, the backlight 103 can supply light for the first display panel 101, and can also supply light for the second display panel 102, so that the first display panel 101 may form the first display picture and the second display panel 102 may form the second display picture, thus a double-sided display function is realized. Optionally, the backlight 103 may be used as a lamp, or as a flash lamp when a camera operates.

With reference to Fig.1 and Fig.2, the sensor comprises a camera 201, when the light-exiting surface of the first display panel 101 is provided to face the first surface of the second display panel 102, the camera 201 is rotated to be at the second surface. When the light-incoming surface of the first display panel 101 is provided to face the second surface of the second display panel 102, the camera 201 is rotated to be at the first surface.

The display device provided in the present embodiment comprises a first display panel, a second display panel and a backlight, the first display panel is flexibly connected with the second display panel, the first display panel is provided at a light-exiting surface side of the backlight; when the light-exiting surface of the first display panel is arranged to be closely adjacent to and face the first surface of the second display panel, the second display panel forms light-shielding regions and light-transmitting regions. The first display panel forms a left image for a left eye of a viewer and a right image for a right eye of the viewer through the light-shielding regions and light-transmitting regions. The solution provided by the present embodiment can realize 3D display without adding an extra parallax barrier member.

Second Embodiment

The present embodiment provides an operating method of the display device, wherein the display device comprises a first display panel, a second display panel and a backlight. As shown in Fig.1 and Fig.2, the first display panel 101 is flexibly connected with the second display panel 102, the first display panel 101 is provided at a light-exiting surface side of the backlight 103, and the second display panel 102 comprises a first surface and a second surface. With reference to Fig.3, the first display panel 101 comprises a first pixel array 106, the second display panel 102 comprises a second pixel array 107, the first pixel array comprises a plurality of first pixel units arranged regularly, the first pixel unit comprises a plurality of sub-pixels, the second pixel array comprises a plurality of second pixel units arranged regularly, the second pixel unit comprises a plurality of sub-pixels.

The operating method comprises: when the first display panel and the second display panel are folded along the first direction, a light-exiting surface of the first display panel is closely adjacent to and faces the first surface of the second display panel, and the second pixel array forms light-shielding regions and light-transmitting regions. The first pixel array forms a left image for a left eye of a viewer and a right image for a right eye of the viewer by means of the light-shielding regions and the light-transmitting regions. The first direction is a direction in which the second display panel 102 is rotated clockwise to overlap with the first display panel 101 with a boundary between the first display panel 101 and the second display panel 102 as an axis.

With reference to Fig.4 to Fig.8, when the second display panel 102 is folded to the first display panel 101 along the first direction, the light-exiting surface of the first display panel 101 is closely adjacent to and faces the first surface of the second display panel 102. When gray values of sub-pixels of the second pixel array 107 are set to zero, the second pixel array forms the light-shielding regions and the light-transmitting regions, by means of which, the first pixel array 106 forms a left image for the left eye and a right image for the right eye, and thus 3D display can be realized without adding an extra parallax barrier member.

In the present embodiment, the operating method further comprises: when the first display panel and the second display panel are folded along the second direction, the light-incoming surface of the first display panel is closely adjacent to and faces the second surface of the second display panel, the first display panel forms a first display picture, and the second display panel forms a second display picture, the first direction is contrary to the second direction, that is, the second direction is a direction in which the second display panel 102 is rotated anticlockwise to overlap with the first display panel 101 with a boundary between the first display panel 101 and the second display panel 102 as an axis. With reference to Fig.10 to Fig.13, the backlight can not only supply light to the first display panel 101, but also supply light to the second display panel 102, so that the first display panel 101 forms the first display picture, and the second display panel 102 forms the second display picture, thus a double-sided display performance is realized.

In the present embodiment, the display device further comprises a sensor and a processor, the sensor and the processor are provided in a peripheral region of the second display panel. The operating method further comprises: the sensor measures a distance between the left eye and the right eye of the viewer; and the processor adjusts widths of the light-shielding regions based on the distance between eyes and a preset width of a sub-pixel of the first pixel array 106. Preferably, the step of the processor adjusts widths of the light-shielding regions based on the distance between eyes and a preset width of a sub-pixel of the first pixel unit comprises a step of: the processor adjusts the widths of the light-shielding regions according to the following light-shielding region adjusting formula:

$$c = \frac{4pl}{p+l}$$

where c is the width of the light-shielding region 108, p is the width of the sub-pixel of the first pixel unit in the first pixel array 106, and I is the distance between eyes of the viewer.

With reference to Fig.8, according to the similar triangle theorem, the following equations can be obtained:

$$\frac{h}{s} = \frac{p}{l} \quad (1)$$

$$\frac{c}{4p} = \frac{s}{s+h} \quad (2)$$

where h is a distance between the first pixel array 106 and the second pixel array 107, s is a distance between the eyes and the second pixel array 107, p is a width of the sub-pixel in the first pixel array 106, I is the distance between the eyes, and c is a width of the light-shielding region 108. The light-shielding region adjusting formula may be obtained based on the equation (1) and the equation (2). The width of the light-shielding region may be adjusted by the above light-shielding region adjusting formula, so that 3D display performance of the display device can be improved.

Preferably, the sensor comprises a camera, and the operating method further comprises: when the light-exiting surface of the first display panel is provided to be closely adjacent to and face the first surface of the second display panel, the camera is rotated to be at the second surface; and when the light-incoming surface of the first display panel is provided to be closely adjacent to and face the second surface of the second display panel, the camera is rotated to be at the first surface.

The operating method of the display device provided in the present embodiment comprises: when the first display panel and the second display panel are folded along the first direction, the light-exiting surface of the first display panel is closely adjacent to and faces the first surface of the second display panel, the second pixel array forms light-shielding regions and light-transmitting regions. The first display panel forms a left image for a left eye of a viewer and a right image for a right eye of the viewer by means of the light-shielding regions and light-transmitting regions. The solution provided by the present embodiment can realize 3D display without adding an extra parallax barrier member.

**Claims**

1. A display device comprising a first display panel (101), a second display panel (102) and a backlight (103), the first display panel (101) is flexibly connected with the second display panel (102), the first display panel (101) is provided at a light-exiting surface side of the backlight (103), the second display panel

(102) comprises a first surface and a second surface which are provided opposite to each other, the first display panel (101) comprises a first pixel array (106), the second display panel (102) comprises a second pixel array (107), the first pixel array (106) comprises a plurality of first pixel units arranged regularly, the first pixel unit comprises a plurality of sub-pixels, the second pixel array (107) comprises a plurality of second pixel units arranged regularly, the second pixel unit comprises a plurality of sub-pixels, wherein a light-exiting surface of the first display panel (101) and the first surface of the second display panel (102) are provided at a same side of the display device when the display panels are arranged side by side, the second display panel (102) is transparent, and wherein

the second display panel (102) is capable of being overlapped with the first display panel (101) along a first direction, so that the light-exiting surface of the first display panel (101) is closely adjacent to and faces the first surface of the second display panel (102), and the second pixel array (107) forms light-shielding regions (108) and light-transmitting regions (109); and the first pixel array (106) forms a left image for a left eye of a viewer and a right image for a right eye of the viewer, so that the viewer can only see the left image by his left eye and only see the right image by his right eye through the light-shielding regions (108) and the light-transmitting regions (109), the backlight (103) is a double-sided illumination backlight (103), the double-sided illumination backlight (103) comprises a first illumination side and a second illumination side opposite to the first illumination side, and the first display panel (101) is located at the first illumination side of the double-sided illumination backlight (103), and

the second display panel (102) is also capable of being overlapped with the first display panel (101) along a second direction, and the second illumination side of the double-sided illumination backlight (103) is closely adjacent to and faces the second surface of the second display panel (102), the double-sided illumination backlight (103) supplies light to the first display panel (101) via the first illumination side of the double-sided illumination backlight (103) and supplies light to the second display panel (102) via the second illumination side of the double-sided illumination backlight (103), so that the first display panel (101) displays a first display picture and the second display panel (102) displays a second display picture, wherein the first direction is contrary to the second direction.

2. The display device of claim 1, wherein the first display panel (101) and the second display panel (102) are also capable of being arranged side by side, so that the first display panel (101) transmits light of the backlight (103), and the second display panel (102) transmits ambient light from a light-incoming surface side of the second display panel (102).

3. The display device of claim 1, wherein light-exiting surface of the first display panel (101) and the first surface of the second display panel (102) are provided with a flexible transparent flat film (202), which is configured to form contact surfaces between the first display panel (101) and the second display panel (102) when the second display panel (102) is folded to the first display panel (101) along the first direction, so that light emitted from the first display panel (101) radiates on the second display panel (102) uniformly.

4. The display device of any one of claims 1 to 3, further comprising a sensor and a processor, the sensor and the processor are provided in a peripheral region of the second display panel (102), wherein the sensor is configured to measure a distance between the left eye and the right eye of the viewer, and the processor is configured to adjust widths of the light-shielding regions (108) based on the distance between the eyes and a preset width of a sub-pixel of the first pixel unit.

5. The display device of claim 4, wherein the processor is configured to adjust the widths of the light-shielding regions (108) according to the following light-shielding region adjusting formula:

$$c = \frac{4pl}{p+l}$$

where c is the width of the light-shielding region, p is the width of the sub-pixel of the first pixel unit, and l is the distance between eyes of the viewer.

6. The display device of claim 4, wherein the sensor comprises a camera (201), when the light-exiting surface of the first display panel (101) is provided to be closely adjacent to and face the first surface of the second display panel (102), the camera (201) is rotated to be at the second surface, when the light-incoming surface of the first display panel (101) is provided to be closely adjacent to and face the second surface of the second display panel (102), the camera (201) is rotated to be at the first surface.

7. An operating method of a display device, wherein the display device comprises a first display panel (101), a second display panel (102) and a backlight (103), the first display panel (101) is flexibly connected with the second display panel (102), the first display panel (101) is provided at a light-exiting surface side of the backlight (103), the second display panel (102) comprises a first surface and a second surface which are provided opposite to each other, the first display panel (101) comprises a first pixel array (106), the second display panel (102) comprises a second pixel array (107), the first pixel array (106) comprises a plurality of first pixel units arranged regularly, the first pixel unit comprises a plurality of sub-pixels, the second pixel array (107) comprises a plurality of second pixel units arranged regularly, the second pixel unit comprises a plurality of sub-pixels, wherein a light-exiting surface of the first display panel (101) and the first surface of the second display panel (102) are provided at a same side of the display device when the display panels are arranged side by side, the second display panel (102) is transparent, and wherein
the operating method comprises:

folding the first display panel (101) and the second display panel (102) along a first direction, so that the light-exiting surface of the first display panel (101) is closely adjacent to and faces the first surface of the second display panel (102), and the second pixel array (107) forms light-shielding regions (108) and light-transmitting regions (109); and
causing the first pixel array (106) to form a left image for a left eye of a viewer and a right image for a right eye of the viewer, so that the viewer can only see the left image by his left eye and only see the right image by his right eye through the light-shielding regions (108) and the light-transmitting regions (109),
the backlight (103) is a double-sided illumination backlight (103), the double-sided illumination backlight (103) comprises a first illumination side and a second illumination side opposite to the first light-exiting surface, and the first display panel (101) is located at the first illumination side of the double-sided illumination backlight (103), and the operating method further comprises:
overlapping the second display panel (102) with the first display panel (101) along a second direction, so that the second illumination side of the double-sided illumination backlight (103) is closely adjacent to and faces the second surface of the second display panel (102);
causing the double-sided illumination backlight (103) supplies light to the first display panel (101) via the first illumination side of the double-sided illumination backlight (103) and supplies light to the second display panel (102) via the second illumination side of the double-sided illumination backlight (103); and
causing the first display panel (101) to display a first display picture and the second display panel (102) to display a second display picture,
wherein the first direction is contrary to the second direction.

8. The operating method of the display device of claim 7, wherein the display device further comprises a sensor and a processor, the sensor and the processor are provided in a peripheral region of the second display panel (102), wherein the operating method further comprises:

measuring, by the sensor, a distance between the left eye and the right eye of the viewer; and
adjusting, by the processor, widths of the light-shielding regions (108) based on the distance between the eyes and a preset width of a sub-pixel of the first pixel unit.

9. The operating method of the display device of claim 8, wherein the step of adjusting, by the processor, widths of the light-shielding regions (108) based on the distance between the eyes and a preset width of a sub-pixel of the first pixel unit comprises a step of: adjusting, by the processor, the widths of the light-shielding regions (108) according to the following light-shielding region adjusting formula:

$$c = \frac{4pl}{p+l}$$

where c is the width of the light-shielding region, p is the width of the sub-pixel of the first pixel unit, and l is the distance between the eyes of the viewer.

10. The operating method of the display device of claim 8, wherein the sensor comprises a camera (201), and the operating method further comprises:

when the light-exiting surface of the first display panel (101) is provided to be closely adjacent to and face the first surface of the second display panel (102), the camera (201) is rotated to be at the second surface, and
when the light-incoming surface of the first display panel (101) is provided to be closely adjacent to and face the second surface of the second display panel (102), the camera (201) is rotated to be at the first surface.

**Patentansprüche**

1. Anzeigevorrichtung mit einem ersten Anzeigefeld (101), einem zweiten Anzeigefeld (102) und einer Hintergrundbeleuchtung (103), wobei das erste Anzeigefeld (101) flexibel mit dem zweiten Anzeigefeld (102) verbunden ist, das erste Anzeigefeld (101) an einer Seite der Lichtaustrittsfläche der Hintergrundbeleuchtung (103) vorgesehen ist, das zweite Anzeigefeld (102) eine erste Fläche und eine zweite Fläche aufweist, die einander gegenüberliegend vorgesehen sind, das erste Anzeigefeld (101) ein erstes Pixelarray (106) aufweist, das zweite Anzeigefeld (102) ein zweites Pixelarray (107) aufweist, das erste Pixelarray (106) mehrere regelmäßig angeordnete erste Pixeleinheiten aufweist, die erste Pixeleinheit mehrere Unterpixel aufweist, das zweite Pixelarray (107) mehrere regelmäßig angeordnete zweite Pixeleinheiten aufweist, die zweite Pixeleinheit mehrere Unterpixel aufweist, wobei eine Lichtaustrittsfläche des ersten Anzeigefeldes (101) und die erste Fläche des zweiten Anzeigefeldes (102) auf derselben Seite der Anzeigevorrichtung vorgesehen sind, wenn die Anzeigefelder nebeneinander angeordnet sind, das zweite Anzeigefeld (102) transparent ist, und wobei

das zweite Anzeigefeld (102) mit dem ersten Anzeigefeld (101) entlang einer ersten Richtung überlappbar ist, so dass die Lichtaustrittsfläche des ersten Anzeigefeldes (101) eng an die erste Fläche des zweiten Anzeigefeldes (102) angrenzt und dieser zugewandt ist, und das zweite Pixelarray (107) Lichtabschirmungsbereiche (108) und lichtdurchlässige Bereiche (109) bildet; und das erste Pixelarray (106) ein linkes Bild für das linke Auge eines Betrachters und ein rechtes Bild für das rechte Auge des Betrachters bildet, so dass der Betrachter durch die Lichtabschirmungsbereiche (108) und die lichtdurchlässigen Bereiche (109) mit seinem linken Auge nur das linke Bild sehen kann und mit seinem rechten Auge nur das rechte Bild sehen kann, die Hintergrundbeleuchtung (103) eine doppelseitige Beleuchtungs-Hintergrundbeleuchtung (103) ist, die doppelseitige Beleuchtungs-Hintergrundbeleuchtung (103) eine erste Beleuchtungsseite und eine der ersten Beleuchtungsseite gegenüberliegende zweite Beleuchtungsseite aufweist, und das erste Anzeigefeld (101) an der ersten Beleuchtungsseite der doppelseitigen Beleuchtungs-Hintergrundbeleuchtung (103) angeordnet ist, und das zweite Anzeigefeld (102) ebenfalls mit dem ersten Anzeigefeld (101) entlang einer zweiten Richtung überlappbar ist, und die zweite Beleuchtungsseite der doppelseitigen Beleuchtungs-Hintergrundbeleuchtung (103) eng an die zweite Fläche des zweiten Anzeigefeldes (102) angrenzt und dieser zugewandt ist, die doppelseitige Beleuchtungs-Hintergrundbeleuchtung (103) dem ersten Anzeigefeld (101) über die erste Beleuchtungsseite der doppelseitigen Beleuchtungs-Hintergrundbeleuchtung (103) Licht zuführt und dem zweiten Anzeigefeld (102) über die zweite Beleuchtungsseite der doppelseitigen Beleuchtungs-Hintergrundbeleuchtung (103) Licht zuführt, so dass das erste Anzeigefeld (101) ein erstes Anzeigebild und das zweite Anzeigefeld (102) ein zweites Anzeigebild anzeigt, wobei die erste Richtung der zweiten Richtung entgegengesetzt ist.

2. Anzeigevorrichtung nach Anspruch 1, wobei das erste Anzeigefeld (101) und das zweite Anzeigefeld (102) sich auch nebeneinander anordnen lassen, so dass das erste Anzeigefeld (101) Licht der Hintergrundbeleuchtung (103) überträgt und das zweite Anzeigefeld (102) Umgebungslicht von einer Seite der Lichteintrittsfläche des zweiten Anzeigefeldes (102) überträgt.

3. Anzeigevorrichtung nach Anspruch 1, wobei die Lichtaustrittsfläche des ersten Anzeigefeldes (101) und die erste Fläche des zweiten Anzeigefeldes (102) mit einem flexiblen transparenten Flachfilm (202) versehen sind, der konfiguriert ist, um Kontaktflächen zwischen dem ersten Anzeigefeld (101) und dem zweiten Anzeigefeld (102) zu bilden, wenn das zweite Anzeigefeld (102) entlang der ersten Richtung zu dem ersten Anzeigefeld (101) gefaltet wird, so dass Licht, das von dem ersten Anzeigefeld (101) emittiert wird, gleichmäßig auf das zweite Anzeigefeld (102) strahlt.

4. Anzeigevorrichtung nach einem der Ansprüche 1 bis 3, ferner mit einem Sensor und einem Prozessor, wobei der Sensor und der Prozessor in einem peripheren Bereich des zweiten Anzeigefeldes (102) vorgesehen sind, wobei

der Sensor konfiguriert ist, um einen Abstand zwischen dem linken Auge und dem rechten Auge des Betrachters zu messen, und

der Prozessor konfiguriert ist, um die Breiten der Lichtabschirmungsbereiche (108) auf der Grundlage des Abstands zwischen den Augen und einer voreingestellten Breite eines Unterpixels der ersten Pixeleinheit einzustellen.

5. Anzeigevorrichtung nach Anspruch 4, wobei der Prozessor konfiguriert ist, um die Breiten der Lichtabschirmungsbereiche (108) gemäß der folgenden Formel zum Einstellen der Lichtabschirmungsbereiche einzustellen:

$$c = \frac{4pl}{p+l}$$

wobei c die Breite des Lichtabschirmungsbereichs, p die Breite des Unterpixels der ersten Pixeleinheit und l der Abstand zwischen den Augen des Betrachters ist.

6. Anzeigevorrichtung nach Anspruch 4, wobei der Sensor eine Kamera (201) umfasst, wobei die Kamera (201), wenn die Lichtaustrittsfläche des ersten Anzeigefeldes (101) so vorgesehen ist, dass sie eng an die erste Fläche des zweiten Anzeigefeldes (102) angrenzt und dieser gegenüberliegt, so gedreht wird, dass sie sich an der zweiten Fläche befindet,

die Kamera (201), wenn die Lichteintrittsfläche des ersten Anzeigefeldes (101) so vorgesehen ist, dass sie eng an die zweite Fläche des zweiten Anzeigefeldes (102) angrenzt und dieser gegenüberliegt, so gedreht wird, dass sie sich an der ersten Fläche befindet.

7. Betriebsverfahren einer Anzeigevorrichtung, wobei die Anzeigevorrichtung ein erstes Anzeigefeld (101), ein zweites Anzeigefeld (102) und eine Hintergrundbeleuchtung (103) aufweist, das erste Anzeigefeld (101) flexibel mit dem zweiten Anzeigefeld (102) verbunden ist, das erste Anzeigefeld (101) an einer Seite der Lichtaustrittsfläche der Hintergrundbeleuchtung (103) vorgesehen ist, das zweite Anzeigefeld (102) eine erste Fläche und eine zweite Fläche aufweist, die einander gegenüberliegend vorgesehen sind, das erste Anzeigefeld (101) ein erstes Pixelarray (106) aufweist, das zweite Anzeigefeld (102) ein zweites Pixelarray (107) aufweist, das erste Pixelarray (106) mehrere regelmäßig angeordnete erste Pixeleinheiten aufweist, die erste Pixeleinheit mehrere Unterpixel aufweist, das zweite Pixelarray (107) mehrere regelmäßig angeordnete zweite Pixeleinheiten aufweist, die zweite Pixeleinheit mehrere Unterpixel aufweist, wobei eine Lichtaustrittsfläche des ersten Anzeigefeldes (101) und die erste Fläche des zweiten Anzeigefeldes (102) auf derselben Seite der Anzeigevorrichtung vorgesehen sind, wenn die Anzeigefelder nebeneinander angeordnet sind, das zweite Anzeigefeld (102) transparent ist, und wobei das Betriebsverfahren umfasst:

Falten des ersten Anzeigefeldes (101) und des zweiten Anzeigefeldes (102) entlang einer ersten Richtung, so dass die Lichtaustrittsfläche des ersten Anzeigefeldes (101) eng an die erste Fläche des zweiten Anzeigefeldes (102) angrenzt und dieser gegenüberliegt, und das zweite Pixelarray (107) Lichtabschirmungsbereiche (108) und lichtdurchlässige Bereiche (109) bildet; und

Veranlassen, dass das erste Pixelarray (106) ein linkes Bild für das linke Auge eines Betrachters und ein rechtes Bild für das rechte Auge des Betrachters bildet, so dass der Betrachter durch die Lichtabschirmungsbereiche (108) und die lichtdurchlässigen Bereiche (109) mit seinem linken Auge nur das linke Bild sehen kann und mit seinem rechten Auge nur das rechte Bild sehen kann,

die Hintergrundbeleuchtung (103) eine doppelseitige Beleuchtungs-Hintergrundbeleuchtung (103) ist, die doppelseitige Beleuchtungs-Hintergrundbeleuchtung (103) eine erste Beleuchtungsseite und eine zweite, der ersten Lichtaustrittsfläche gegenüberliegende Beleuchtungsseite aufweist, und das erste Anzeigefeld (101) an der ersten Beleuchtungsseite der doppelseitigen Beleuchtungs-Hintergrundbeleuchtung (103) angeordnet ist, und das Betriebsverfahren ferner umfasst:

Überlappen des zweiten Anzeigefeldes (102) mit dem ersten Anzeigefeld (101) entlang einer zweiten Richtung, so dass die zweite Beleuchtungsseite der doppelseitigen Beleuchtungs-Hintergrundbeleuchtung (103) eng an die zweite Fläche des zweiten Anzeigefeldes (102) angrenzt und dieser zugewandt ist;

Veranlassen, dass die doppelseitige Beleuchtungs-Hintergrundbeleuchtung (103) dem ersten Anzeigefeld (101) über die erste Beleuchtungsseite der doppelseitigen Beleuchtungs-Hintergrundbeleuchtung (103) Licht zuführt und dem zweiten Anzeigefeld (102) über die zweite Beleuchtungsseite der doppelseitigen Beleuchtungs-Hintergrundbeleuchtung (103) Licht zuführt; und

Veranlassen, dass das erste Anzeigefeld (101) ein erstes Anzeigebild anzeigt und das zweite Anzeigefeld (102) ein zweites Anzeigebild anzeigt,

wobei die erste Richtung der zweiten Richtung entgegengesetzt ist.

8. Betriebsverfahren der Anzeigevorrichtung nach Anspruch 7, wobei die Anzeigevorrichtung ferner einen Sensor und einen Prozessor aufweist, wobei der Sensor und der Prozessor in einem peripheren Bereich des zweiten Anzeigefeldes (102) vorgesehen sind, wobei das Betriebsverfahren ferner umfasst:

Messen eines Abstands zwischen dem linken Auge und dem rechten Auge des Betrachters durch den Sensor; und

Einstellen der Breiten der Lichtabschirmungsbereiche (108) durch den Prozessor auf der Grundlage des Abstands zwischen den Augen und einer voreingestellten Breite eines Unterpixels der ersten Pixeleinheit.

9. Betriebsverfahren der Anzeigevorrichtung nach Anspruch 8, wobei der Schritt des Einstellens der Breiten der Lichtabschirmungsbereiche (108) durch den Prozessor auf der Grundlage des Abstands zwischen den Augen und einer voreingestellten Breite eines Unterpixels der ersten Pixeleinheit folgenden Schritt umfasst:

Einstellen der Breiten der Lichtabschirmungsbereiche (108) durch den Prozessor gemäß der folgenden Formel zum Einstellen des Lichtabschirmungsbereichs:

$$c = \frac{4pl}{p+l}$$

wobei c die Breite des Lichtabschirmungsbereichs, p die Breite des Unterpixels der ersten Pixeleinheit und I der Abstand zwischen den Augen des Betrachters ist.

10. Betriebsverfahren der Anzeigevorrichtung nach Anspruch 8, wobei der Sensor eine Kamera (201) umfasst, und das Betriebsverfahren ferner Folgendes umfasst:

wenn die Lichtaustrittsfläche des ersten Anzeigefeldes (101) so vorgesehen ist, dass sie eng an die erste Fläche des zweiten Anzeigefeldes (102) angrenzt und dieser zugewandt ist, Drehen der Kamera (201), so dass sie sich an der zweiten Fläche befindet, und
wenn die Lichteintrittsfläche des ersten Anzeigefeldes (101) so vorgesehen ist, dass sie eng an die zweite Fläche des zweiten Anzeigefeldes (102) angrenzt und dieser gegenüberliegt, Drehen der Kamera (201), so dass sie sich an der ersten Fläche befindet.

**Revendications**

1. Dispositif d'affichage comprenant un premier panneau d'affichage (101), un second panneau d'affichage (102) et un rétroéclairage (103), le premier panneau d'affichage (101) est connecté de manière flexible avec le second panneau d'affichage (102), le premier panneau d'affichage (101) est prévu sur un côté de la surface de sortie de lumière du rétroéclairage (103), le second panneau d'affichage (102) comprend une première surface et une seconde surface qui sont disposées l'une en face de l'autre, le premier panneau d'affichage (101) comprend un premier réseau de pixels (106), le second panneau d'affichage (102) comprend un second réseau de pixels (107), le premier réseau de pixels (106) comprend une pluralité de premières unités de pixels disposées régulièrement, la première unité de pixels comprend une pluralité de sous-pixels, le second réseau de pixels (107) comprend une pluralité de secondes unités de pixels disposées régulièrement, la seconde unité de pixels comprend une pluralité de sous-pixels, dans lequel une surface de sortie de la lumière du premier panneau d'affichage (101) et la première surface du second panneau d'affichage (102) sont prévues du même côté du dispositif d'affichage lorsque les panneaux d'affichage sont disposés côte à côte, le second panneau d'affichage (102) est transparent, et dans lequel le second panneau d'affichage (102) est capable de chevaucher le premier panneau d'affichage (101) le long d'une première direction, de sorte que la surface de sortie de la lumière du premier panneau d'affichage (101) est étroitement adjacente et fait face à la première surface du second panneau d'affichage (102), et le second réseau de pixels (107) forme des régions de protection contre la lumière (108) et des régions de transmission de lumière (109) ; et le premier réseau de pixels (106) forme une image gauche pour un œil gauche d'un spectateur et une image droite pour un œil droit du spectateur, de sorte que le spectateur ne peut voir l'image gauche que par son œil gauche et ne peut voir l'image droite que par son œil droit à travers les régions de protection contre la lumière (108) et les régions de transmission de lumière (109),
le rétroéclairage (103) est un rétroéclairage d'éclairage à double face (103), le rétroéclairage d'éclairage à double face (103) comprend un premier côté d'éclairage et un second côté d'éclairage opposé au premier côté d'éclairage, et le premier panneau d'affichage (101) est situé sur le premier côté d'éclairage du rétroéclairage d'éclairage double face (103), et le second panneau d'affichage (102) est également capable de chevaucher le premier panneau d'affichage (101) le long d'une seconde direction, et le second côté d'éclairage du rétroéclairage d'éclairage à double face (103) est étroitement adjacent et fait face à la seconde surface du second panneau d'affichage (102), le rétroéclairage d'éclairage à double face (103) fournit de la lumière au premier panneau d'affichage (101) via le premier côté d'éclairage du rétroéclairage d'éclairage à double face (103) et fournit de la lumière au second panneau d'affichage (102) via le second côté d'éclairage du rétroéclairage d'éclairage à double face (103), de sorte que le premier panneau d'affichage (101) affiche une première image d'affichage et le second panneau d'affichage (102) affiche une seconde image d'affichage, dans lequel le la première direction est contraire à la second direction.

2. Dispositif d'affichage selon la revendication 1, dans lequel le premier panneau d'affichage (101) et le second panneau d'affichage (102) peuvent également être disposés côte à côte, de sorte que le premier panneau d'affichage (101) transmet la lumière du rétroéclairage (103), et le second panneau d'affichage (102) transmet la lumière ambiante à partir d'un côté de surface d'entrée de la lumière du second panneau d'affichage (102).

3. Dispositif d'affichage selon la revendication 1, dans lequel la surface de sortie de la lumière du premier panneau d'affichage (101) et la première surface du second panneau d'affichage (102) sont pourvues d'un film plat transparent flexible (202), qui est configuré pour former des surfaces de contact entre le premier panneau d'affichage (101) et le second panneau d'affichage (102) lorsque le second panneau d'affichage (102) est plié sur le premier panneau d'affichage (101) le long de la première direction, de sorte que la lumière émise par le premier panneau d'affichage (101) rayonne sur le second panneau d'affichage (102) de manière uniforme.

4. Dispositif d'affichage selon l'une quelconque des revendications 1 à 3, comprenant en outre un capteur et un processeur, le capteur et le processeur sont prévus dans une région périphérique du second panneau d'affichage (102), dans lequel
le capteur est configuré pour mesurer une distance entre l'œil gauche et l'œil droit du spectateur, et
le processeur est configuré pour ajuster les largeurs des régions de protection contre la lumière (108) sur la base de la distance entre les yeux et une largeur prédéfinie d'un sous-pixel de la première unité de pixels.

5. Dispositif d'affichage selon la revendication 4, dans lequel le processeur est configuré pour ajuster les largeurs des régions de protection contre la lumière (108) selon la formule d'ajustement de la région de protection contre la lumière suivante :

$$C = \frac{4pl}{p+l}$$

où c est la largeur de la zone de protection contre la lumière, p est la largeur du sous-pixel de la première unité de pixels, et *l* est la distance entre les yeux du spectateur.

6. Dispositif d'affichage selon la revendication 4, dans lequel le capteur comprend une caméra (201), lorsque la surface de sortie de la lumière du premier panneau d'affichage (101) est prévue pour être étroitement adjacente et faire face à la première surface du second panneau d'affichage (102), la caméra (201) est tournée pour se trouver au niveau de la seconde surface, lorsque la surface d'entrée de la lumière du premier panneau d'affichage (101) est prévue pour être étroitement adjacente et faire face à la seconde surface du second panneau d'affichage (102), la caméra (201) est tournée pour se trouver sur la première surface.

7. Procédé de fonctionnement d'un dispositif d'affichage, dans lequel le dispositif d'affichage comprend un premier panneau d'affichage (101), un second panneau d'affichage (102) et un rétroéclairage (103), le premier panneau d'affichage (101) est connecté de manière flexible avec le second panneau d'affichage (102), le premier panneau d'affichage (101) est prévu sur un côté de la surface de sortie de la lumière du rétroéclairage (103), le second panneau d'affichage (102) comprend une première surface et une seconde surface qui sont prévues l'une en face de l'autre, le premier panneau d'affichage (101) comprend un premier réseau de pixels (106), le second panneau d'affichage (102) comprend un second réseau de pixels (107), le premier réseau de pixels (106) comprend une pluralité de premières unités de pixels disposées de manière régulière , la première unité de pixels comprend une pluralité de sous-pixels, la seconde matrice de pixels (107) comprend une pluralité de seconds unités de pixels disposées de manière régulière, la seconde unité de pixels comprend une pluralité de sous-pixels, dans laquelle une surface de sortie de la lumière du premier panneau d'affichage (101) et la première surface du second panneau d'affichage (102) sont prévues sur un même côté du dispositif d'affichage lorsque les panneaux d'affichage sont disposés côte à côte, le second panneau d'affichage (102) est transparent, et dans lequel le procédé de fonctionnement comprend les étapes consistant à :

plier le premier panneau d'affichage (101) et le second panneau d'affichage (102) le long d'une première direction, de sorte que la surface de sortie de la lumière du premier panneau d'affichage (101) soit étroitement adjacente et fasse face à la première surface du second panneau d'affichage (102), et le second réseau de pixels (107) forme des régions de protection contre la lumière (108) et des régions de transmission de lumière (109) ; et
amener le premier réseau de pixels (106) à former une image gauche pour un œil gauche d'un spectateur et une image droite pour un œil droit du spectateur, de sorte que le spectateur ne peut voir l'image gauche que par son œil gauche et ne peut voir l'image droite que par son œil droit à travers les régions de protection contre la lumière (108) et les régions de transmission de lumière (109),
le rétroéclairage (103) est un rétroéclairage d'éclairage à double face (103), le rétroéclairage d'éclairage à double face (103) comprend un premier côté d'éclairage et un second côté d'éclairage opposé à la première surface de sortie de la lumière, et le premier panneau d'affichage (101) est situé sur le premier côté d'éclairage du rétroéclairage d'éclairage à double face (103), et le procédé de fonctionnement comprend en outre les étapes consistant à :

faire chevaucher le second panneau d'affichage (102) avec le premier panneau d'affichage (101) le long d'une seconde direction, de sorte que le second côté d'éclairage du rétroéclairage d'éclairage à double face (103) est étroitement adjacent et fait face à la seconde surface du second panneau d'affichage (102) ;

amener le rétroéclairage d'éclairage double face (103) à fournir de la lumière au premier panneau d'affichage (101) via le premier côté d'éclairage du rétroéclairage d'éclairage à double face (103) et à fournir de la lumière au second panneau d'affichage (102) via le second côté d'éclairage du rétroéclairage d'éclairage à double face (103) ; et

amener le premier panneau d'affichage (101) à afficher une première image d'affichage et le second panneau d'affichage (102) à afficher une seconde image d'affichage,

dans lequel la première direction est contraire à la seconde direction.

8. Procédé de fonctionnement du dispositif d'affichage selon la revendication 7, dans lequel le dispositif d'affichage comprend en outre un capteur et un processeur, le capteur et le processeur sont prévus dans une région périphérique du second panneau d'affichage (102), dans lequel le procédé de fonctionnement comprend en outre les étapes consistant à :

mesurer, par le capteur, une distance entre l'œil gauche et l'œil droit du spectateur ; et

ajuster, par le processeur, les largeurs des régions de protection contre la lumière (108) sur la base de la distance entre les yeux et une largeur prédéfinie d'un sous-pixel de la première unité de pixels.

9. Procédé de fonctionnement du dispositif d'affichage selon la revendication 1, dans lequel l'étape de réglage, par le processeur, des largeurs des régions de protection contre la lumière (108) sur la base de la distance entre les yeux et d'une largeur prédéfinie d'un sous-pixel de la première unité de pixels comprend une étape consistant à :

ajuster, par le processeur, les largeurs des régions de protection contre la lumière (108) selon la formule de réglage de la région de protection contre la lumière suivante :

$$C = \frac{4pl}{p + l}$$

où c est la largeur de la zone de protection contre la lumière, p est la largeur du sous-pixel de la première unité de pixels et *l* est la distance entre les yeux du spectateur.

10. Procédé de fonctionnement du dispositif d'affichage selon la revendication 8, dans lequel le capteur comprend une caméra (201), et le procédé de fonctionnement comprend en outre les étapes suivantes :

lorsque la surface de sortie de la lumière du premier panneau d'affichage (101) est prévue pour être étroitement adjacente et faire face à la première surface du second panneau d'affichage (102), la caméra (201) est tournée pour se trouver sur la seconde surface, et

lorsque la surface d'entrée de la lumière du premier panneau d'affichage (101) est prévue pour être étroitement adjacente et faire face à la seconde surface du second panneau d'affichage (102), la caméra (201) est tournée pour se trouver sur la première surface.

101          105          102

201

105

Fig.1

103          105

104

201

Fig. 2

101    106    102    107

109

Fig.3

104    105

201

102

first
direction

Fig.4

105 —                                              — 104

103 —

Fig.5

101    103    104                    105

102

Fig.6

103

106

Fig.7

107

109  108

106

107

108  109

A        B

Fig.8

103          105

106      202      107

Fig.9

104 —|—— ——|— 101

105

second
direction

Fig.10

105 —|——

102 —|—— ——|— 104

Fig.11

102    104    105

103    101

Fig.12

107

106

103

Fig.13

**REFERENCES CITED IN THE DESCRIPTION**

**Patent documents cited in the description**

- US 2013053100 A1
- US 2009207124 A1